# EUROPEAN PATENT APPLICATION

(11) **EP 3 000 798 A1**
(43) Date of publication of application: **30.03.2016**
(21) Application number: 13885153.0
(22) Date of filing: 04.06.2013
(51) Int. Cl.: C06D 5/00, C06B 31/00, C06B 25/00, C06B 45/00

(54) **GAS GENERATOR HAVING INCREASED COMBUSTION RATE AND COMBUSTION GAS AMOUNT**

(30) Priority: 21.05.2013 KR 20130057168
(71) Applicant: Samsong Industries Ltd., Seoul 137-894 (KR)
(72) Inventor: LEE, Young-Ho, Boeun-gun Chungcheongbuk-do 376-812 (KR); LEE, Seung-Jae, Boeun-gun Chungcheongbuk-do 376-812 (KR); YOON, Ji-Hae, Boeun-gun Chungcheongbuk-do 376-812 (KR)
(74) Representative: Wunderlich, Rainer
(86) International application number: PCT/KR2013/004901
(87) International publication number: WO 2014/189168

(57) **Abstract**

The present invention relates to a gas generator which is a core component of an inflator used for expanding an airbag for alleviating the impact on a passenger occurring during a vehicle collision, and provides the gas generator capable of generating a high combustion rate and a large quantity of gas. The present invention provides a gas generator having a combustion rate of 20 mm/sec or higher, a generated gas amount of 33 moles/kg or higher and a combustion temperature of 2300 K or lower by using: copper diamine dinitrate (CDD) as a principal oxidizing agent; basic copper nitrate (BCN) as an auxiliary oxidizing agent; guanidine nitrate (GN) as a principal fuel; 5-aminotetrazole (5-AT) as a combustion-rate-increasing fuel; metal oxide and a combustible catalyst as catalysts; and an additive. Also, the internal pressure of the inflator manufactured by using the gas generator is reduced to 100 bar, and thus the inflator is manufactured so as to weigh 250g which is a remarkable reduction in comparison with 440g of existing product A and 330g of existing product B.

## Description

### [Technical Field]

The present invention relates to a gas generator formed as a pellet having a columnar structure and generating a gas such as nitrogen, vapor, and carbon dioxide and a product having a condensed phase available to be filtered when burnt in an inflator, and an inflator including the same. When a vehicle collides, an igniter, an ignition charge, and a gas generator of an inflator are ignited and burnt in order according to an electrical signal sensed by a collision sensor, and a gas generated according to the combustion of the gas generator passes through a filter to allow a solid matter to be filtered out, cooled, and subsequently introduced to an interior of a folded airbag to inflate the airbag to alleviate an impact applied to a passenger generated when an automobile collides. This application claims the benefit of earlier filing date and right of priority to Korean Application No. 10-2013-0057168, filed on May 21, 2013, the contents of which is incorporated by reference herein in its entirety.

### [Background Art]

A pyrotechnic gas generator used to inflate a vehicle airbag has a composition having a metal azide such as a sodium azide mainly generating a nitrogen gas, as a base, at an initial stage. However, the gas generator having the metal azide base has major shortcomings of being a toxic material. The azide is easily hydrated and decomposed to generate a hydroazoic acid. The hydroazoic acid has high toxicity and is easily reacted to a heavy metal such as copper or lead to produce a sensitive compound. Thus, the gas generator containing azide may cause crucial casualties and environmental pollution if not managed carefully from preparation to storing and final discardment

Due to the problem of the azide-based gas generator, nonazide-based gas generator was developed at the end of 1990s to replace the azide-based gas generator and used in an inflator inflating airbags. The initial nonazide-based gas generator has problems such as a low combustion rate, having a large amount of particles and generating a harmful gas, compared with the azide-based gas generator. Here, regarding the particles, a slag forming agent is added to a gas generator so as to be used or a structure of a filter, or the like, of an inflator has been improved, solving the problems, and as for the harmful gas, a raw material not containing a harmful gas component (for example, sulfur (S) or chlorine (Cl)) is used and an oxygen balance (OB) is appropriately adjusted not to generate a harmful gas equal to or greater than a reference value, thus making great improvements. However, research into and development of a combustion rate, a gas amount, and a combustion temperature representing most importance performance of a gas generator have been conducted yet. Since internal pressure is lowered as the combustion rate is high, a high combustion rate is desirable, since a charge amount is reduced as a gas amount is increased, a larger gas amount is desirable, and damage to an airbag is minimized as a combustion temperature is low, a low combustion temperature is desirable. Referring to gas generators developed so far, a combustion rate, a gas amount, and a combustion temperature are in a trade-off relation. That is, generally, when a combustion rate is high, a gas amount is small, and when the gas amount is large, the combustion rate is low and a combustion temperature is excessively high.

When the combustion rate is high, internal pressure when a gas generator pallet within an inflator is burnt may be designed to be low, and thus, a thickness of a metal of the inflator body tolerating the pressure may be reduced. Also, when a gas amount is abundant, an amount of a gas generator may be reduced with respect to the same gas amount, and thus, a size of the inflator may be reduced. Also, when the combustion temperature is low, damage to an airbag is reduced. In this manner, the technique of reducing an inflator in weight and size may be a basic factor of competitiveness of cost of inflators.

In the related art, in order to increase the combustion rate of a gas generator, a method of adding a metal oxide catalyst vanadium pentaoxide (V₂O₅), molybdenum oxide (MoO₃), iron oxide (Fe₂O₃), aluminum oxide (Al₂O₃), zinc oxide (ZnO), magnesium oxide (MgO), zind peroxide (ZnO₂), or boron oxide (B₂O₃) or a method of adding combustion rate-increasing fuels having good reactivity has been used.

In Embodiment 3 of U.S. Patent No. 6689237 B1(February 10, 2004), guanidine nitrate (GN) as fuel, basic copper nitrate (BCN) as an oxidizing agent, copper bis-ethylenediamine 5,5'-bitetrazole as a combustion rate-increasing agent, and aluminum oxide (Al₂O₃) as a metal oxide catalyst are used and a combustion rate is 16.51 mm/sec.

In Embodiments 4 to 6 of U.S. Patent No. 6712918 B2(March 30, 2004), basic copper nitrate (BCN) as an oxidizing agent, guanidine nitrate (GN) as fuel, copper diamine bitetrazole (CDAB) as a combustion rate-increasing agent, and alumina as a metal oxide catalyst are used and a combustion rate is 10.67 to 13.2 mm/sec.

In an embodiment of U.S. Patent No. 7470337 B2 (December 30, 2008), basic copper nitrate (BCN) as an oxidizing agent, guanidine nitrate (GN) as fuel, aluminum oxide (Al₂O₃) as a metal oxide catalyst, and 20% of copper II bis-4- nitroimidazole as a combustion rate-increasing agent are used and to realize a relatively fast combustion rate of 20.2 mm/sec but a generated gas amount is very low as 22.84 moles/kg.

Meanwhile, as an oxidizing agent for increasing an amount of gas, a material having a relative large amount of gas such as ammonium nitrate (AN), a phase stabilized ammonium nitrate (PSAN), or copper diamine dinitrate (CDD) was used. However, among them, ammonium nitrate is well known as a material having a phase changed at -16.8°C, 32.3°C, 84.2°C, and 125.2°C, and due to expansion and contraction based on the phase change, cracks and pulverization occur to increase a combustion surface area to cause an abnormal combustion phenomenon. Thus, in order to reduce the phase change, PSAN obtained by adding an additive such as potassium nitrate (KNO₃), magnesium nitrate (Mg(NO₃)₂), potassium fluoride (KF), metal (Cu, Zn, or Ni), and copper diamine dinitrate to stabilize the phase is used.

In U.S. Patent US 6017404 A1 (January 25, 2000), PSAN phase-stabilized with 10% of potassium nitrate (KNO₃) as an oxidizing agent, high bulk density nitroguanidine and diammonium bitetrazole as fuel, and monarch blue, cerium oxide (CeO₂), and polyalkylene carbonate (QPAC-40) as an additive are used. With this composition, a gas amount is 40 moles/kg, sufficient, but a reaction quantity of heat is excessively high as 2740 to 2892 K and a combustion rate is very low as 10 to 11 mm/sec.

In U.S. Patent US 6074502 A1 (June 13, 2000), PSAN phase-stabilized with 10% of potassium nitrate (KNO₃) as an oxidizing agent and a combination of BHT.2NH₃, hydrazodicarbonamide (AH), and azodicarbonamide (AH) as fuel are used. With this composition, a gas amount is 40 moles/kg, sufficient, but a reaction quantity of heat is 887 to 984 kcal/kg and a reaction temperature is 2437 to 6502 K, lower than those of the aforementioned patents, but still high, and a combustion rate is very low as 7.87 to 11.43 mm/sec.

In Embodiment 10 of U.S. Patent US 6287400 B1 (September 11, 2001), PSAN phase-stabilized with 10% of potassium nitrate (KNO₃) as an oxidizing agent and a 5-amino tetrazole nitrate (5-ATN) as fuel are used. With this composition, a gas amount is 38.98 moles/kg, sufficient, and a combustion rate is 17.53 mm/sec, appropriate, but a reaction quantity of heat is 1197 kcal/kg, too high, and a reaction temperature is 3655K, also too high.

As described above, the compositions using PSAN as an oxidizing agent to increase a gas amount are successful in terms of gas amount, but the reaction quantities of heat and temperature were too high. In particular, in some compositions with fast combustion rate, a reaction quantity and a temperature were even too high.

Another oxidizing agent for increasing a gas amount is copper diamine dinitrate (CDD). CDD is first produced by a reaction between copper oxide (CuO) and ammonium nitrate (AN) in U.S. Patent No. 5063036 A1 (November 5, 1991) and used as an additive material for phase-stabilizing ammonium nitrate (AN).

In U.S. Patent US 6103030 A1 (August 15, 2000), ammonium nitrate (AN) and copper diamine dinitrate (CDD) as oxidizing agents, guanidine nitrate (GN) as fuel, and silicon dioxide (SiO₂) as a slag forming agent are used. According to a result of an embodiment composition test performed while changing the content of ammonium nitrate (AN) and copper diamine dinitrate (CDD), a gas amount was 32.64∼42.13moles/kg, relatively abundant, while a combustion rate was 7.14 to 13.23 mm/sec, relatively low.

In U.S. Patent US 6550808 A1 (April 22, 2003), copper diamine dinitrate (CDD) as an oxidizing agent, guanidine nitrate (GN) and guanylurea nitrate (GUN) as fuel, and silicon dioxide (SiO₂) as a slag forming agent are used. In the composition using GN, gas amounts and combustion rates are 33.55 moles/cg and 6.35 mm/sec, respectively, and in the composition using GUN, a gas amount and a combustion rate are 31.68 moles/kg and 8.38 mm/sec.

As described above, in the existing Patents, when the combustion rate is high, the gas amount is small, and when the gas amount is large, the combustion rate is low. Also, when the combustion gas amount and the combustion rate are large and high, a combustion temperature is excessively high. That is, a gas generator composition realizing both a generated gas amount equal to or greater than 33 moles/kg and a combustion temperature equal to or lower than 2300K at a combustion rate equal to or higher than 20 mm/sect (at 1000 psi) to be achieved by the present invention has not appeared yet.

### [Disclosure]

### [Technical Problem]

The present invention has been made to solve the above-mentioned problems occurring in the prior art, and an aspect of the present invention provides a gas generator having a combustion rate equal to or higher than 20 mm/sec (at pressure of 1000 psi), a generated gas amount equal to or greater than 33 moles/kg, and combustion temperature performance equal to or lower than 2300K, which has not been realized yet.

Another aspect of the present invention provides an inflator manufactured to include the gas generator.

### [Technical Solution]

According to an aspect of the present invention, there is provided a gas generator including a principal oxidizing agent, an auxiliary oxidizing agent, principal fuel, combustion rate-increasing fuel, a catalyst, and an additive, wherein Copper diamine dinitrate as the principal oxidizing agent is contained in an amount of 55 to 70 wt%, Basic copper nitrate as the auxiliary oxidizing agent is contained in an amount of 0 to 10 wt%, Guanidine nitrate as the principal fuel is contained in an amount of 15 to 30 wt%, 5-Aminotetrazole as the combustion rate-increasing fuel is contained in an amount of 10 to 16 wt%, a metal oxide as the catalyst is contained in an amount of 0.5 to 5 wt%, a combustible catalyst is contained in an amount of 0.5 to 5 wt%, and a lubricant as the additive is contained in an amount of 0.2 to 1 wt%.

According to another aspect of the present invention, there is provided an inflator manufactured using the gas generator.

### [Advantageous Effects]

In the gas generator for an inflator according to an embodiment of the present invention, Copper diamine dinitrate is used as a principal oxidizing agent, 5-aminotetrazole as a combustion rate-increasing fuel, and a metal oxide and Carbon Black are used as catalysts, and an oxygen balance is designed up to -3.5%, and particle size of each raw material was optimized to achieve the object of the present invention. The present invention provides the gas generator having a combustion rate equal to or higher than 20 mm/sec, a generated gas amount equal to or greater than 33 moles/kg, and a combustion temperature performance equal to or lower than 2300K at 1000 psi.

Also, an inflator using the gas generator was manufactured and performance thereof was tested. The result shows that all the functions as the inflator are satisfied and the highest pressure generated at the inner side may be lowered to 100 bar or lower. It is possible to lower the value even to 160 bar and 120bar, compared with 260bar of an existing product A and 220 bar of an existing product B. Also, it is possible to reduce an amount of the gas generator included in the inflator due to the increased generated gas amount. In case of an inflator for a driver's seat, existing 37g may be reduced to 33g and in case of an inflator for a passenger's seat, existing 73g may be reduced to 66g. In this manner, since the internal pressure is significantly reduced, a thickness of a housing that the inflator may be able to tolerate can be reduced relatively. It is possible to reduce a thickness of the existing product A, 1.9mm, and a thickness of the existing product B, 1.5mm, to 1.0mm. According to the reduction in the thickness of the housing and the reduction in the amount of the gas generator, a weight is reduced. That is, weights of the existing products A and B, respectively, 440g and 330g, may be reduced to 250g.

### [Description of Drawings]

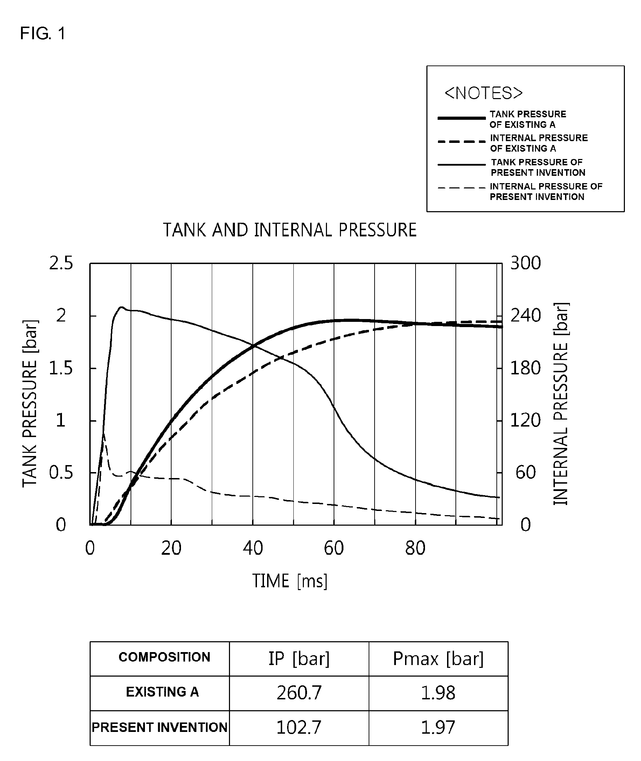

FIG. 1 is a graph illustrating a result of a tank test performance measurement, as a test performed using the gas generator prepared in Embodiment 5 of the present invention and an inflator of an existing product.

### [Best Modes]

Hereinafter, the present invention will be described in detail.

A gas generator of the present invention includes a principal oxidizing agent, an auxiliary oxidizing agent, principal fuel, combustion rate-increasing fuel, a catalyst, and an additive.

Oxidizing agents generally used in a gas generator are as follows.

A material having a greatest amount of gas components, among existing oxidizing agents, is ammonium perchlorate (AP:NH₄ClO₄) and ammonium nitrate (AN:NH₄NO₃). Both of the two materials include a 100% gaseous material. However, the ammonium perchlorate (AP:NH₄ClO₄) contains a chlorine (Cl) component, a Cl removing agent is required to remove a Cl₂ gas, and thus, a metal to be bonded with Cl is required, and also, since it is impossible to remove a 100% Cl₂ gas, ammonium perchlorate (AP:NH₄ClO₄) is not appropriate as a gas generator.

Also, ammonium nitrate (AN:NH₄NO₃) is a material whose phase is changed at four points of -16.8°C, 32.3°C, 84.2°C, and 125.2°C. When ammonium nitrate (AN:NH₄NO₃) is used in a gas generator, a pallet of the gas generator is cracked and crushed according to expansion and contraction of ammonium nitrate (AN:NH₄NO₃) due to the phase change, increasing a combustion surface area to cause an abnormal combustion phenomenon to explode the inflator. Thus, ammonium nitrate (AN:NH₄NO₃) is not appropriate as a gas generator. Thus, in order to reduce such a phase change, PSAN obtained by adding an additive such as potassium nitrate (KNO₃), magnesium nitrate (Mg(NO₃)₂), potassium fluoride (KF), metal diamine dinitrate (MDD) (Cu, Zn, or Ni) to ammonium nitrate (AN:NH₄NO₃) to stabilize the phase is used. Many patents use PSAN. However, since PSAN is a material having a very high combustion temperature and high hygroscopicity, when a large amount of PSAN is used to increase a gas amount, PSAN should be handled carefully. Also, even though a phase change is eliminated, it is impossible to use PSAN by an amount equal to or greater than 5 wt% due to thermal expansion thereof.

In the present invention, as the principal oxidizing agent, copper diamine dinitrate (CDD) is used. CDD has a gas component smaller than those of ammonium perchlorate (AP:NH₄ClO₄) and ammonium nitrate (AN:NH₄NO₃), but it does not have a Cl component that may generate a toxic gas and does not have a phase change and hygroscopicity, and thus, CDD may be easily used and handled. However, in order to generate a requested amount of gas, a large amount of CDD needs to be used, which reduces a combustion rate. The shortcomings of the reduction in the combustion rate is complemented by using 5-Aminotetrazole as a combustion rate-increasing fuel and both a metal oxide and Carbon Black as catalysts.

CDD as the principal oxidizing agent was first produced according to a reaction between copper oxide (CuO) and ammonium nitrate (AN:NH₄NO₃) in U.S. Patent No. 5063036 A1 (November 5, 1991), and is a known oxidizing agent used as an additive material to phase-stabilize ammonium nitrate (AN:NH₄NO₃). This material is easily produced according to the method described in the U.S. Patent No. 5063036 A1, and each company produces it as necessary, so the material has not be commercialized as a product. CDD has heat of formation as -185.5kcal/mole, an oxygen balance as +21.67%, a gas component as 71.3%, and is insoluble in water. Also, since CDD includes copper (Cu), a Cu melting material is formed after combustion, and thus, it may be filtered easily. Also, CDD has combustibility better than that of ammonium nitrate (AN:NH₄NO₃), and thus, CDD may increase a combustion rate compared with the ammonium nitrate (AN:NH₄NO₃) composition.

A usage amount of the principal oxidizing agent is, preferably, 55 to 70 wt% with respect to a total weight of the composition of the gas generator. When the usage amount of the principal oxidizing agent exceeds 70 wt%, the oxygen balance for achieving the object of the present invention cannot be designed as -3.5%, and here, when the oxygen balance exceeds -3.5% to reduce a gas amount and a combustion rate. When the usage amount of the principal oxidizing agent is less than 55 wt%, the oxygen balance is less than -3.5%, making it difficult to design CO concentration to be lower than 461 ppm as a regulation value of CO concentration and a combustion rate is also reduced.

In the present invention, an auxiliary oxidizing agent may be used to supplement an insufficient amount of oxygen of the principal oxidizing agent. In the present invention, basic copper nitrate is used as the auxiliary oxidizing agent. The basic copper nitrate is a known oxidizing agent which has a very low heat of formation, is not dissolved in water, and has an oxygen balance of +29.985%. The basic copper nitrate lowers a combustion temperature of a gas generator, reducing an a generation amount of NOx and CO and burning a large amount of fuel. Also, after combustion, the basic copper nitrate forms a Cu melting material, it may be filtered easily. Also, since the basic copper nitrate has good reactivity, an operation thereof for increasing ignitionability or combustibility is excellent compared with other oxidizing agent. However, since a gas amount thereof is relatively small, the basic copper nitrate may be effectively used together with the principal oxidizing agent having a large gas amount.

In a case in which an auxiliary oxidizing agent is added to the gas generator, a usage amount of the auxiliary oxidizing agent may range from 0 to 10 wt% with respect to a total weight of the composition. When the auxiliary oxidizing agent exceeds 10 wt%, a characteristic value of the auxiliary oxidizing agent is reflected in the composition of the gas generator, disadvantageously reducing a combustion rate and increasing a combustion rate index.

In the present invention, as the principal fuel, Guanidine nitrate, known fuel which has been used since the early 1900s. Guanidine nitrate has shortcomings in that it has hygroscopicity and is slow in a combustion rate, but an oxygen balance thereof is -26.2%, relatively high, a gas amount is large, and a combustion temperature is relatively low, and as such, Guanidine nitrate is substantially essentially used fuel.

In the gas generator of the present invention, fuel is included in an amount of 15 to 30 wt% over the total weight of the composition. If the wt% of the fuel exceeds the aforementioned range, it is impossible to design according to basic matters such as the oxygen balance of -3.5% and the generated gas amount as the characteristics of the present invention.

Also, in order to improve the shortcomings of the Guanidine nitrate having a low combustion rate and bad combustibility as the principal fuel, combustion rate-increasing fuel (auxiliary fuel) may be added to the composition of the present invention. As the combustion rate-increasing fuel, preferably, 5-Aminotetrazole is used. The combustion rate-increasing fuel serves to increase the content of a nitrogen gas in the gas and increase a combustion rate of the composition. However, since the combustion temperature of the gas generator is increased, a usage amount of the auxiliary fuel preferably ranges from 10 to 16 wt% over the total weight of the gas generator composition of the present invention.

As a catalyst of the present invention, a mixed catalyst is used, which includes a metal oxide and a combustible catalyst. Metal oxide used as a catalyst material may be a mixture of one or more selected from the group consisting of iron oxide (Fe₂O₃), titanium oxide (TiO₂), aluminum oxide (Al₂O₃), zinc oxide (ZnO), magnesium oxide (MgO), manganese oxide (MnO), manganese dioxide (MnO₂), and boron oxide (B₂O₃), and here, preferably, manganese oxide (MnO) is used.

Also, a usage amount of a metal oxide as a catalyst with respect to a total weight of the gas generator is preferably 0.5 to 5 wt%. When the usage amount of the metal oxide exceeds 5 wt%, an effect for the excessive content does not appear, and when the usage amount of the metal oxide is less than 0.5 wt%, the catalyst amount is too small to obtain an effect.

In the present invention, a combustible catalyst used as the catalyst material may be a mixture of one or more selected from the group consisting of carbon black, aluminum, magnesium, silicon, zinc, zirconium, manganese, and boron, and preferably, carbon black may be used.

Also, a usage amount of the combustible catalyst, as a catalyst, is preferably 0.5 to 5 wt% with respect to the total weight of the gas generator. When the usage amount of the combustible catalyst exceeds 5 wt%, a large amount of oxygen is required, making it difficult to design the oxygen balance to -3.5%. When the usage amount of the combustible catalyst is less than 0.5 wt%, the catalyst amount is too small to have an effect.

Also, a particle size of the metal oxide catalyst and the combustible catalyst is very important, and in order to exhibit a function as a catalyst, preferably, an average particle size is equal to or less than 1 *µ*m.

The present invention may include a lubricant to improve admixture and moldability. As the lubricant, one or more of mixtures selected from the group consisting of molybdenum disulfide (MoS₂), calcium stearate (CaS), and zinc stearate (ZnS) as process auxiliary materials may be used.

Also, a slag forming agent, silicon dioxide (SiO₂), diatomite, and silicate, known materials, may be added as additives, and a binder may be included. As the binder, polyvinyl acetate (PVA), vinyl alcohol acetate resin (VAAR), guar gum, or starch may be used.

Meanwhile, the lubricant may reduce an effect of the gas generator, and thus, the lubricant is preferably used as minimum as possible. Thus, preferably, a usage amount of the lubricant over the total weight of the gas generator of the present invention is 0.2 to 1 wt%. When the usage of the lubricant exceeds 1 wt%, a combustion rate and a gas amount of the gas generator may be reduced. When the usage of the lubricant is less than 0.2 wt%, the effect of the lubricant cannot be obtained.

An average particle of the principal oxidizing agent, the auxiliary oxidizing agent, the principal fuel, the combustion rate-increasing fuel, and the additives, excluding the metal oxide as a catalyst and the combustible catalyst, preferably ranges from 5 to 15*µ*m.

Hereinafter, a method for preparing the gas generator of the present invention will be described.

An oxygen balance, a combustion calorie, a combustion temperature, and a generated gas amount for preparing a gas generator are theoretically calculated according to a composition ratio of the composition. The combustion rate is obtained by performing pressing with a strand having a specific gravity of 1.8 g/cc, a diameter of 6mm, and a length of 90 mm, and burning within a bomb having 1000 psi (68 atm), measuring a time during which a length of 70 mm is burnt, and subsequently dividing the length by the combustion time.

As for the composition of the gas generator according to the present invention, the aforementioned components were mixed, applied to a ball mill, and blended for two hours to prepare a dry-phase mixture.

### [Mode For Invention]

Hereinafter, the present invention will be described in more detail through embodiments and experimental examples. The embodiments and experimental examples are merely illustrative of the present invention and the scope of the present invention is not limited by the embodiments and experimental examples.

### Embodiment 1

55 wt% of copper diamine dinitrate (CDD) as a principal oxidizing agent, 6 wt% of Basic Copper Nitrate (BCN) as an auxiliary oxidizing agent, 25.8 wt% of Guanidine nitrate as principal fuel, 11 wt% of 5-Aminotetrazole (5-AT) as combustion rate-increasing fuel, 1 wt% of manganese oxide (MnO) as a metal oxide catalyst, 1 wt% of carbon black as a combustible catalyst, and 0.2 wt% of calcium stearate (CaS) as an additive were mixed and measured such that a total amount was 400g, applied to a ball mill, and blended for 2 hours to prepare a dry-phase mixture. Theoretically, this composition was calculated to have an oxygen balance as -3.5%, a combustion calorie as 705 kcal/kg, a combustion temperature as 2282K, and a gas amount as 33.12 mole/kg, and a combustion rate measured at 1000 psi was 20.83 mm/sec. Manganese oxide (MnO) and carbon black having an average particle size of 1 *µ*m or less and the other raw materials having an average particle size ranging from 5 to 15*µ*m were used.

### Embodiment 2

55 wt% of copper diamine dinitrate (CDD) as a principal oxidizing agent, 3.17 wt% of basic copper nitrate (BCN) as an auxiliary oxidizing agent, 27.63 wt% of guanidine nitrate as principal fuel, 11 wt% of 5-aminotetrazole (5-AT) as combustion rate-increasing fuel, 2.5 wt% of manganese oxide (MnO) as a metal oxide catalyst, 0.5 wt% of carbon black as a combustible catalyst, and 0.2 wt% of calcium stearate (CaS) as an additive were mixed and measured such that a total amount was 400g, applied to a ball mill, and blended for 2 hours to prepare a dry-phase mixture. Theoretically, this composition was calculated to have an oxygen balance as -3.5%, a combustion calorie as 707 kcal/kg, a combustion temperature as 2260K, and a gas amount as 33.37 mole/kg, and a combustion rate measured at 1000 psi was 20.45 mm/sec. Manganese oxide (MnO) and carbon black having an average particle size of 1 *µ*m or less and the other raw materials having an average particle size ranging from 5 to 15*µ*m were used.

### Embodiment 3

57.64 wt% of copper diamine dinitrate (CDD) as a principal oxidizing agent, 26.16 wt% of guanidine nitrate as principal fuel, 11 wt% of 5-aminotetrazole (5-AT) as combustion rate-increasing fuel, 4.5 wt% of manganese oxide (MnO) as a metal oxide catalyst, 0.5 wt% of carbon black as a combustible catalyst, and 0.2 wt% of calcium stearate (CaS) as an additive were mixed and measured such that a total amount was 400g, applied to a ball mill, and blended for 2 hours to prepare a dry-phase mixture. Theoretically, this composition was calculated to have an oxygen balance as -3.5%, a combustion calorie as 698 kcal/kg, a combustion temperature as 2225K, and a gas amount as 33 mole/kg, and a combustion rate measured at 1000 psi was 20.23 mm/sec. Manganese oxide (MnO) and carbon black having an average particle size of 1 *µ*m or less and the other raw materials having an average particle size ranging from 5 to 15*µ*m were used.

### Embodiment 4

66.39 wt% of copper diamine dinitrate (CDD) as a principal oxidizing agent, 20.11 wt% of guanidine nitrate as principal fuel, 11 wt% of 5-aminotetrazole (5-AT) as combustion rate-increasing fuel, 0.5 wt% of manganese oxide (MnO) as a metal oxide catalyst, 1.8 wt% of carbon black as a combustible catalyst, and 0.2 wt% of calcium stearate (CaS) as an additive were mixed and measured such that a total amount was 400g, applied to a ball mill, and blended for 2 hours to prepare a dry-phase mixture. Theoretically, this composition was calculated to have an oxygen balance as -3.5%, a combustion calorie as 710 kcal/kg, a combustion temperature as 2285K, and a gas amount as 33.07 mole/kg, and a combustion rate measured at 1000 psi was 21.55 mm/sec. Manganese oxide (MnO) and carbon black having an average particle size of 1 *µ*m or less and the other raw materials having an average particle size ranging from 5 to 15*µ*m were used.

### Embodiment 5

65.36 wt% of copper diamine dinitrate (CDD) as a principal oxidizing agent, 17.44 wt% of guanidine nitrate as principal fuel, 15 wt% of 5-aminotetrazole (5-AT) as combustion rate-increasing fuel, 1 wt% of manganese oxide (MnO) as a metal oxide catalyst, 1 wt% of carbon black as a combustible catalyst, and 0.2 wt% of calcium stearate (CaS) as an additive were mixed and measured such that a total amount was 400g, applied to a ball mill, and blended for 2 hours to prepare a dry-phase mixture. Theoretically, this composition was calculated to have an oxygen balance as -3.5%, a combustion calorie as 719 kcal/kg, a combustion temperature as 2290K, and a gas amount as 33.2 mole/kg, and a combustion rate measured at 1000 psi was 23.8 mm/sec. Manganese oxide (MnO) and carbon black having an average particle size of 1 *µ*m or less and the other raw materials having an average particle size ranging from 5 to 15*µ*m were used.

### Embodiment 6

61.76 wt% of copper diamine dinitrate (CDD) as a principal oxidizing agent, 19.54 wt% of guanidine nitrate as principal fuel, 15 wt% of 5-aminotetrazole (5-AT) as combustion rate-increasing fuel, 3 wt% of manganese oxide (MnO) as a metal oxide catalyst, 0.5 wt% of carbon black as a combustible catalyst, and 0.2 wt% of calcium stearate (CaS) as an additive were mixed and measured such that a total amount was 400g, applied to a ball mill, and blended for 2 hours to prepare a dry-phase mixture. Theoretically, this composition was calculated to have an oxygen balance as -3.5%, a combustion calorie as 711 kcal/kg, a combustion temperature as 2295K, and a gas amount as 33.01 mole/kg, and a combustion rate measured at 1000 psi was 23.34 mm/sec. Manganese oxide (MnO) and carbon black having an average particle size of 1 *µ*m or less and the other raw materials having an average particle size ranging 5 to 15*µ*m were used.

### Comparative Example 1

41.73 wt% of basic copper nitrate (BCN) as a principal oxidizing agent and 58.27 wt% of guanidine nitrate as principal fuel were mixed and measured such that a total amount was 400g, applied to a ball mill, and blended for 2 hours to prepare a dry-phase mixture. Theoretically, this composition was calculated to have an oxygen balance as -2.75%, a combustion calorie as 659 kcal/kg, a combustion temperature as 2072K, and a gas amount as 32.11 mole/kg, and a combustion rate measured at 1000 psi was 6.294 mm/sec. BCN and guanidine nitrate having a particle size of 5 to 15*µ*m were used.

Table 1 below shows composition ratio, theoretical calculation values, and combustion test results of Embodiments 1 to 6 and Comparative Example 1.

**[Table 1]**

| Classification | | Embodiment 1 | Embodiment 2 | Embodiment 3 | Embodiment 4 | Embodi ment 5 | Embodiment 6 | Comparative Example 1 |
|---|---|---|---|---|---|---|---|---|
| C o m p o s i t i o n | CDD | 55 | 55 | 57.64 | 66.39 | 65.36 | 61.76 | 41.73 |
| | BCN | 6 | 3.17 | | | - | - | - |
| | GN | 25.8 | 27.63 | 26.16 | 20.11 | 17.44 | 19.54 | 58.27 |
| | 5-AT | 11 | 11 | 11 | 11 | 15 | 15 | - |
| | MnO | 1 | 2.5 | 4.5 | 0.5 | 1 | 3 | - |
| | Carbon black | 1 | 0.5 | 0.5 | 1.8 | 1 | 0.5 | - |
| | CaS | 0.2 | 0.2 | 0.2 | 0.2 | 0.2 | 0.2 | - |
| O.B (%) | | -3.5 | -3.5 | -3.5 | -3.5 | -3.5 | -3.5 | -2.75 |
| Reaction heat (kcal/kg) | | 705 | 707 | 698 | 710 | 719 | 711 | 659 |
| Reaction temperatur e (K) | | 2282 | 2260 | 2225 | 2285 | 2290 | 2295 | 2072 |
| Gas amount (mole/kg) | | 33.12 | 33.37 | 33.00 | 33.07 | 33.2 | 33.01 | 32.11 |
| Combustio n rate (mm/sec) | | 20.83 | 20.45 | 20.23 | 21.55 | 23.8 | 23.34 | 6.294 |

| | | | | | | | | |
|---|---|---|---|---|---|---|---|---|
| In Table 1 above, 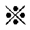 CDD = Copper diamine dinitrate BCN = Basic Copper Nitrate GN = Guanidine Nitrate 5-AT = 5-Amino tetrazole CaS = Calcium stearate | | | | | | | | |

In Comparative Example 1 using only BCN as a known oxidizing agent and GN as known fuel, a generated gas amount was 32.11 moles/kg, but a combustion rate was 6.294 mm/sec, very low. In contrast, in the gas generators according to Embodiments 1 to 6 of the present invention, the gas generators were all maintained to be 33 moles/kg or greater and the combustion rates were all equal to or greater than 20 mm/sec and combustion temperatures were equal to or lower than 2300K. Thus, the technical subject of the gas generator intended by the present invention was achieved.

### Experimental Example 1

### Inflator application test

A pallet was prepared to have a charge specific gravity of 1.8g/cc, a diameter of 6mm, and a thickness of 2.4mm according to the composition ratio of Embodiment 5 and applied to an inflator to measure tank test performance. A result thereof is illustrated in FIG. 1. An internal pressure was 100 bar or lower, considerably lower than 260bar of the existing product A, and tank pressure was 2bar, a tank maximum pressure arrival time was 70ms or less, and an initial emission time after operation was 5ms or less.

A closure of the inflator applied thereto was 1.2mm and a thickness of a diffuser was 1.0 mm.

## Claims

1. A gas generator including a principal oxidizing agent, principal fuel, combustion rate-increasing fuel, a catalyst, and an additive, wherein copper diamine dinitrate as the principal oxidizing agent is contained in an amount of 55 to 70 wt%, guanidine nitrate as the principal fuel is contained in an amount of 15 wt% to 30 wt%, 5-aminotetrazole as the combustion rate-increasing fuel is contained in an amount of 10 wt% to 16 wt%, a metal oxide as the catalyst is contained in an amount of 0.5 wt% to 5 wt%, a combustible catalyst is contained in an amount of 0.5 wt% to 5 wt%, and a lubricant as the additive is contained in an amount of 0.2 wt% to 1 wt%.

2. The gas generator of claim 1, wherein basic copper nitrate as the auxiliary oxidizing agent is contained in an amount of 0 to 10 wt% with respect to a total weight of the gas generator.

3. The gas generator of claim 2, w herein an average particle size of the principal oxidizing agent, the auxiliary oxidizing agent, the principal fuel, the combustion rate-increasing fuel, and the additive ranges from 5 to 15*µ*m, and an average particle size of the metal oxide as the catalyst and the combustible catalyst is 1 *µ*m or less.

4. The gas generator of claim 1, wherein the metal oxide is a mixture of one or more selected from the group consisting of iron oxide (Fe₂O₃), titanium oxide (TiO₂), aluminum oxide (Al₂O₃), zinc oxide (ZnO), magnesium oxide (MgO), manganese oxide (MnO), manganese dioxide (MnO₂), and boron oxide (B₂O₃).

5. The gas generator of claim 1, wherein the combustible catalyst is a mixture of one or more selected from the group consisting of carbon black, aluminum, magnesium, silicon, zinc, zirconium, manganese, and boron.

6. The gas generator of claim 1, wherein the lubricant is a mixture of one or more selected from the group consisting of molybdenum disulfide (MoS₂), calcium stearate (CaS), and zinc stearate (ZnS).

7. The gas generator of claim 2, wherein the gas generator is included in an inflator for a vehicle airbag, and internal pressure of the inflator is 100 bar or lower.

8. The gas generator of claim 2, wherein the combustion rate of the gas generator is 20 mm/sec or higher, a generated gas amount thereof is 33 moles/kg or greater, and a combustion temperature thereof is 2300K or lower.

9. An inflator manufactured using the gas generator of any one of claims 1 to 8.
